(19) Europäisches Patentamt

European Patent Office

Office européen des brevets

(11) **EP 0 691 252 A1**

(12) **DEMANDE DE BREVET EUROPEEN**

(43) Date de publication:
**10.01.1996 Bulletin 1996/02**

(51) Int Cl.⁶: **B60T 13/68**, F15B 13/044, F15B 9/03, G05D 3/14

(21) Numéro de dépôt: **95401422.1**

(22) Date de dépôt: **16.06.1995**

(84) Etats contractants désignés:
**AT BE DE ES FR GB IT NL SE**

(30) Priorité: **21.06.1994 FR 9407571**

(71) Demandeur: **THOMSON-CSF
F-75008 Paris (FR)**

(72) Inventeur: **Menard, Christian,
Thomson-CSF SCPI
F-92402 Courbevoie Cédex (FR)**

(74) Mandataire: **Benoit, Monique et al
F-92402 Courbevoie Cédex (FR)**

(54) **Dispositif de commande d'un tiroir hydraulique**

(57)   L'invention concerne un dispositif de commande d'un tiroir hydraulique. Le tiroir hydraulique (1) étant mis en mouvement par un moteur (11) et des moyens de rappel (71), le dispositif comprend des moyens (72, 73, 74, 75, 78) pour commander le sens de rotation du moteur en fonction de l'erreur de position de ce dernier, les moyens de commande du sens de rotation étant contrôlés par un signal fourni par un circuit de correction (51) dont la fonction de transfert ($K(s)$) corrige un effet de jet (31, 32, 61) s'exerçant sur le tiroir (1).

Application : Systèmes hydrauliques nécessitant de larges bandes passantes.

FIG.7

**CORRIGENDUM** émis le 14.02.96

EP 0 691 252 A1

## Description

La présente invention concerne un dispositif de commande d'un tiroir hydraulique. Elle s'applique notamment à l'asservissement de position de tiroirs hydrauliques à un ou plusieurs étages pour la transmission d'énergie de commande mécanique dont l'application nécessite de très faibles temps de réponse et une grande stabilité, comme dans certains systèmes de freinage par exemple.

Il existe plusieurs solutions de transmission d'énergie de commande mécanique, notamment à base d'organes pneumatiques, électriques ou hydrauliques. Les organes pneumatiques ont des temps de réponse trop lents pour beaucoup d'applications et les organes électriques nécessitent de grands quantités d'énergie électrique incompatibles avec des systèmes embarqués. Ces deux types d'organes sont de plus relativement coûteux. Les systèmes de commande des véhicules modernes, notamment appliqués au freinage ou au guidage automatique par exemple, exigent des temps de réponses de plus en plus courts, correspondant par exemple à des bandes passantes supérieures à 10 Hz. Par ailleurs, la diminution du coût global des véhicules ou des matériels impose de réduire de plus en plus le coût de leurs organes constitutifs donc y compris celui des organes de commande précités. Actuellement, seuls les organes hydrauliques paraissent susceptibles d'être les mieux adaptés pour transmettre l'énergie de commande mécanique embarquée dans des véhicules ou des matériels mobiles, de façon peu coûteuse et suffisamment rapide conformément aux exigences de nouvelles conditions techniques et économiques.

Les dispositifs généralement utilisés dans le domaine des commandes hydrauliques mettent en oeuvre des organes complets tels que les servomécanismes à base de valves de débit ou de pression par exemple. Les organes hydrauliques possèdent des caractéristiques et des architectures qui constituent un ensemble homogène et dont la fonction de contrôle du débit ou de la pression est constituée d'un ensemble de plusieurs étages composés de tiroirs et ressorts.

En général, ces servomécanismes possèdent deux étages. Le premier étage constituant un actionneur linéaire, commande une palette munie d'un axe ou barreau en mouvement par magnétisation qui résulte de l'action d'un courant traversant un solénoïde associé à l'axe. Le deuxième étage est un amplificateur hydraulique composé d'un tiroir et d'un ressort de rappel par exemple. Les inerties mécaniques, les résonances et les constantes de temps compliquent l'asservissement et limitent la rapidité de déplacement des organes. Il est néanmoins possible d'améliorer les performances de ces systèmes, notamment celles relatives à leur temps de réponse ou bande passante, mais au prix d'un accroissement de leur complexité qui accroît considérablement leurs coûts de fabrication, compatibles éventuellement d'applications aéronautiques mais incompatibles d'application à des véhicules terrestres, par exemple, produits en grande série et à faibles coûts imposés.

Une solution connue susceptible de diminuer les inconvénients précités, notamment en simplifiant l'asservissement grâce à des phénomènes de résonance et d'instabilité moins dominants, consiste à remplacer l'actionneur précédent, de type linéaire, par un actionneur rotatif, transmettant par l'intermédiaire d'une bielle par exemple, un mouvement de translation au tiroir hydraulique et à remplacer les ressorts au deuxième étage par un ressort de rappel s'exerçant sur l'actionneur rotatif. Si cette dernière solution moins complexe et plus économique, améliore bien les performances en supprimant notamment les phénomènes de résonance, les essais réalisés jusqu'à présent n'ont jamais permis d'atteindre les temps de réponse souhaités, de l'ordre de 0,1 seconde par exemple, correspondant à des bandes passantes de l'ordre de 10 Hz environ.

Un inconvénient présenté par ces systèmes hydrauliques, qu'ils soient linéaires ou rotatifs, est qu'ils peuvent présenter des instabilités.

Une solution connue pour supprimer ces instabilités, c'est-à-dire les oscillations du tiroir hydraulique, consiste à adjoindre à ce dernier un ressort ayant une grande force de rappel. Cette solution n'est cependant pas adaptée à des systèmes nécessitant de faibles temps de réponse, à cause notamment de la force de rappel du ressort.

Le but de l'invention est de pallier les inconvénients précités, notamment en permettant la réalisation de systèmes de transmission hydraulique capables de répondre à des consignes de position avec de faibles temps de réponse tout en restant stables.

A cet effet, l'invention a pour objet un dispositif de commande d'un tiroir hydraulique, le tiroir hydraulique étant mis en mouvement par un moteur et un ressort de rappel, caractérisé en ce qu'il comprend des moyens pour commander le sens de rotation du moteur en fonction de l'erreur de position de ce dernier, les moyens de commande du sens de rotation étant contrôlés par un signal binaire fourni par un circuit de correction dont la fonction de transfert corrige un effet de jet s'exerçant sur le tiroir.

L'invention a pour principaux avantages qu'elle est compatible par exemple avec des systèmes de freinage ou de guidage automatique, qu'elle est économique et qu'elle est simple à mettre en oeuvre.

D'autres caractéristiques et avantages de l'invention apparaîtront à l'aide de la description qui suit faite en regard des dessins annexés qui représentent :

- la figure 1 : un tiroir hydraulique déplacé par un actionneur rotatif.

- la figure 2 : un exemple d'asservissement adapté au système précité.

- les figures 3 et 4 : l'action d'un effet de jet mis en évidence par la déposante sur un système constitué d'un moteur entraînant un tiroir hydraulique.

- la figure 5 : un schéma canonique de l'asservissement de position du moteur précité.

- la figure 6 : un paramètre représentatif de l'effet de jet pris en compte dans la fonction de transfert de la fonction de correction de position du moteur.

- la figure 7 : un exemple de mise en oeuvre du dispositif selon l'invention.

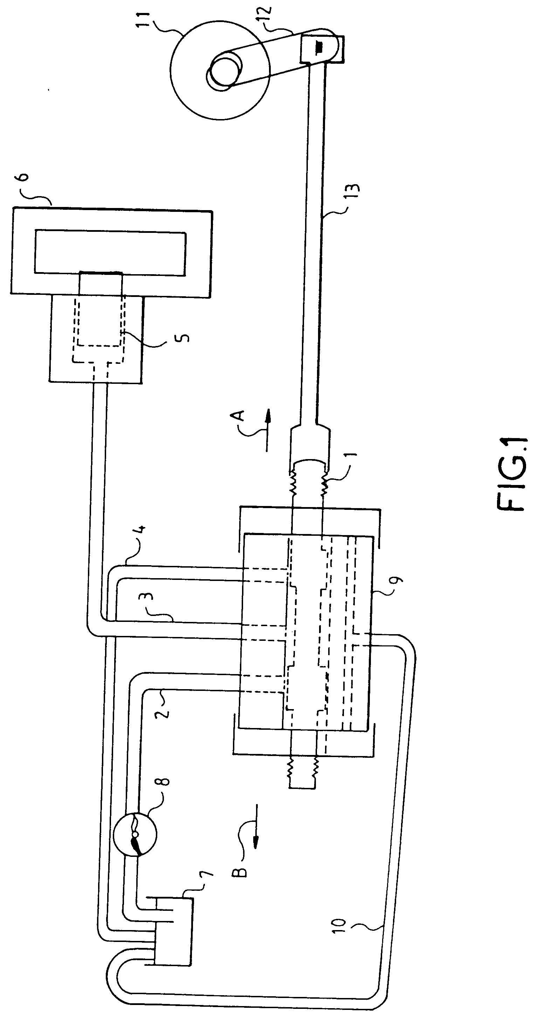

La figure 1 présente à titre d'exemple un actionneur rotatif 11 équipé d'un ressort de rappel non représenté et transmettant par l'intermédiaire d'une bielle 12 et d'une barre 13 un mouvement de translation à un tiroir hydraulique 1 contenu dans un corps 9. Ce tiroir aiguille la circulation d'huile ou de liquide de freinage à travers plusieurs circuits hydrauliques 2, 3, 4. Le tiroir hydraulique 1, en se déplaçant dans le sens indiqué par la flèche A, permet au débit hydraulique présent dans un premier circuit 2 d'être aiguillé vers un deuxième circuit 3, mettant ainsi en communication la génération hydraulique avec l'utilisation, c'est-à-dire avec un piston 5 agissant sur l'étrier d'un frein 6 par exemple. Lorsque le tiroir se déplace dans le sens indiqué par la flèche B, le circuit d'utilisation 3 est mis en communication avec un troisième circuit 4. Ce dernier circuit assure la mise en communication de l'utilisation, le piston 5, avec un réservoir 7. Le premier circuit 2 est relié au réservoir 7 par l'intermédiaire d'une pompe 8 régulée à une certaine pression, 150 bars par exemple. Le corps 9 possède à chacune de ses extrémités un soufflet de récupération d'huile ou de liquide qui est ensuite transmise par un circuit 10 au réservoir 7.

L'électro-aimant de l'actionneur rotatif 1 peut être commandé par un courant impulsionnel de fréquence égale à 500 Hz à 20 kHz par exemple. Des moyens de suppression de son énergie magnétisante tels qu'exposés dans le demande de brevet français N° 92 02843 peuvent par exemple être adjoints à l'électro-aimant afin d'améliorer la bande passante du système.

Le dispositif de la figure 1 offre la possibilité de changer entre la bielle 12 et le tiroir hydraulique 1, la composition du mouvement et du déplacement à la demande, selon que des cames sont intercalées ou non entre la bielle 12 et le tiroir hydraulique 1. La bielle 12 peut être par ailleurs prolongée au-delà de l'axe de translation du tiroir hydraulique 1 représenté par la barre 13. Cela permet en effet d'agir directement et manuellement sur la position du tiroir indépendamment de l'asservissement de position ou de dysfonctionnements éventuels au niveau de cet asservissement. Ce dernier est réalisé par exemple par un module électronique, non représenté sur la figure 1.

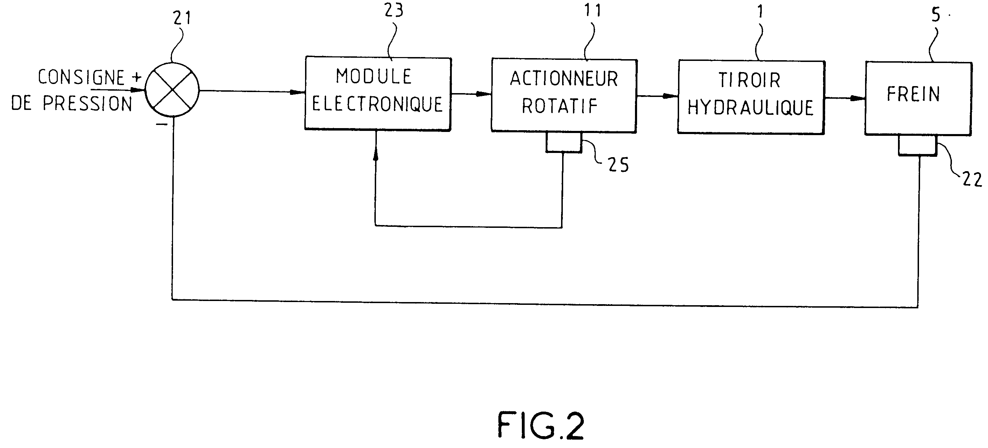

La figure 2 présente le synoptique d'un type d'asservissement possible adapté au dispositif précédent de la figure 1.

Une consigne de pression est affichée à l'entrée positive d'un élément différentiateur 21. Ce dernier transmet une information d'erreur par exemple à un module électronique 23. Un opérateur interne à ce module transforme cette erreur de pression en erreur de position. Le module électronique fournit un courant I à l'électro-aimant de l'actionneur rotatif 11 fonction de la position angulaire désirée de celui-ci. Le capteur de position angulaire 25 de l'actionneur rotatif envoie au module électronique 23 une tension ou un courant représentatif de la position de l'actionneur. Le module électronique 23 assure une comparaison avec une consigne fonction de l'information d'erreur fournie par l'élément différenciateur 21 et détermine un signal d'erreur qui devient nul lorsque la position demandée et celle indiquée par le capteur de position 25 sont identiques. La position angulaire de l'actionneur rotatif 11 correspond à une position linéaire du tiroir hydraulique 1. Dans un cas d'utilisation à un système de freinage par exemple, selon la position du tiroir hydraulique 1, la pression est appliquée à l'utilisation donc au piston du frein 5 ou envoyée vers le réservoir 7. Dans le cas où la pression est envoyée au frein, cette dernière augmente dans le frein. Un capteur de pression 22 relié à l'entrée négative de l'élément différentiateur 21 indique la pression réelle obtenue dans le frein. Lorsque la consigne de pression et la pression réelle dans le frein sont égales, l'actionneur rotatif 11 se positionne de telle manière que le tiroir hydraulique 1 soit placé dans une position qui ne permet pas à la pression d'alimentation de se transmettre au frein et, de ce fait, la pression reste constante.

L'asservissement présenté par la figure 2 présente en fait deux boucles d'asservissement : une première boucle d'asservissement de la pression dans le frein, ou ce qui revient au même, de la position du tiroir, et une deuxième boucle d'asservissement de la position du moteur. Cette deuxième boucle peut en fait être assimilée à une boucle de prépositionnement du tiroir, cette fonction de prépositionnement pouvant améliorer les temps de réponse du système. Cependant, des instabilités, se traduisant par des oscillations du tiroir, peuvent se produire. La force de rappel du ressort relié au tiroir hydraulique est alors augmentée pour amortir les oscillations et par là même diminuer ou amortir ces instabilités. Il s'ensuit notamment que le bénéfice d'utilisation de la boucle de prépositionnement du moteur est perdu, les temps de réponse du système étant rallongés.

Les expériences et simulations réalisées par la Déposante ont montré que les instabilités précitées étaient dues à un effet de jet. Cet effet impose notamment au moteur d'entraînement du tiroir hydraulique de développer une grande puissance au moment de l'ouverture de ce tiroir.

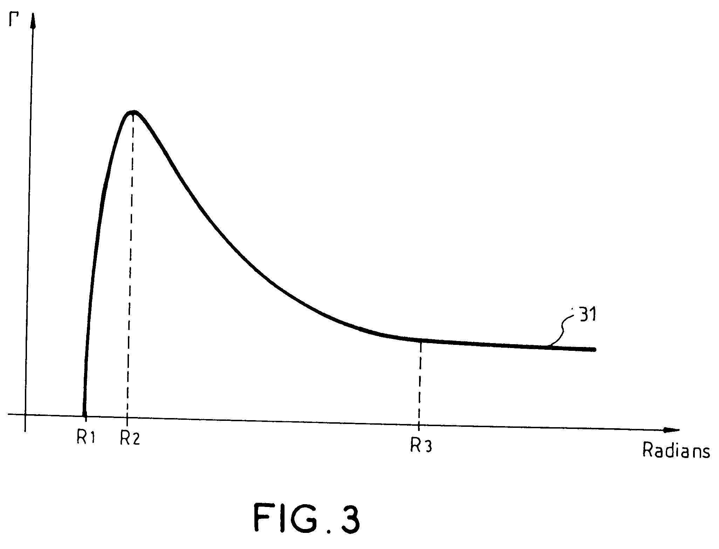

La figure 3 présente par une courbe l'effet de jet mis en évidence par la Déposante et susceptible de se produire à l'ouverture du tiroir hydraulique. Cette courbe 31 représente l'action antagoniste, un couple résistant, générée par cet effet en fonction de la position angulaire du moteur, l'actionneur rotatif 11 de la figure 1 par exemple. L'effet de jet est illustré ici sur un actionneur rotatif, cependant son action serait la même sur un actionneur linéaire. Dans le cas de la figure 3, la position angulaire du moteur est par exemple exprimée en radians.

La courbe 31 peut être divisée en quatre zones dans lesquelles le rôle de l'effet de jet a été défini par la Déposante :

- pour un angle $\theta$ tel que $0 \leqq \theta \leqq R_1$, les orifices du tiroir sont obturés, il n'y a pas de débit d'huile et l'effet de jet est nul. Le tiroir est alors déplacé dans sa zone morte.

- pour un angle $\theta$ tel que $R_1 \leqq \theta \leqq R_2$, l'orifice de l'admission est ouvert progressivement et l'huile débite dans la charge. L'effet de jet augmente avec la position angulaire du moteur jusqu'à se stabiliser pour $\theta = R_2$. L'effet de jet est alors maximal, il représente ici le couple maximal que doit produire le moteur pour déplacer le tiroir.

- pour un angle $\theta$ tel que $R_2 \leqq \theta \leqq R_3$, l'effet de jet décroît lorsque la position augmente. Si cette décroissance est trop importante, il apparaît que le système devient incontrôlable.

- pour un angle $\theta \geqq R_3$, l'effet de jet a disparu et la force F reste sensiblement constante.

C'est la troisième zone de décroissance de l'effet de jet, qui est en fait sensible car c'est dans cette zone que la Déposante a mis en évidence des instabilités.

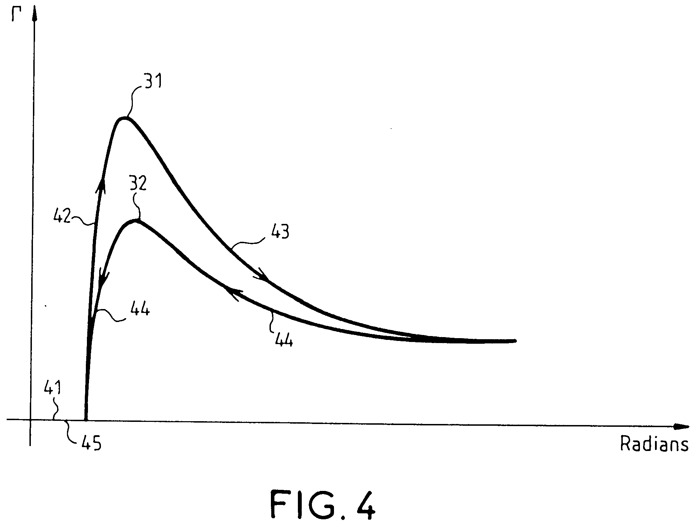

La figure 4 illustre un cycle de fonctionnement d'un tiroir hydraulique relevé par la déposante et soumis à l'effet de jet, la première courbe 31 représente le couple antagoniste généré par l'effet de jet en fonction de la position angulaire du moteur par un déplacement aller et une deuxième courbe 32 représente cette force antagoniste pour un déplacement retour.

Dans une première zone 41 du cycle, le tiroir se déplace dans sa zone morte. Il n'y a aucun débit, donc aucun effet de jet. L'asservissement de position est parfaitement assuré, l'écart entre la consigne et la sortie est minimal.

Dans une deuxième zone 42, l'orifice de l'admission est ouvert progressivement. Il y a débit, donc effet de jet. L'asservissement en position est encore assuré mais l'écart entre la consigne et la sortie s'amplifie au fur et à mesure que la consigne augmente, l'erreur produite peut être appelée erreur de traînage.

Dans une troisième zone 43, le tiroir atteint puis dépasse le point où l'action de l'effet de jet commence à s'affaiblir. Le système traverse une zone de la caractéristique de l'effet de jet qui peut rendre le système instable, voir incontrôlable, créant notamment des oscillations du tiroir hydraulique. Ce phénomène est dû à la pente négative de la caractéristique.

Dans une quatrième zone 44, la consigne baisse et le système revient dans le domaine stable de la caractéristique de l'effet de jet. L'asservissement réagit de la même façon que dans la deuxième zone 42. Lorsque le point de fonctionnement traverse cette quatrième zone 44, l'amplitude de la caractéristique de l'effet de jet baisse, car la perte de charge au niveau du tiroir est plus faible. Le débit est plus faible et l'effet de jet est moins important puisque ce dernier est en général proportionnel au carré du débit.

Dans une cinquième zone 45, l'orifice de l'admission est fermé. Il n'y a plus de débit, ni d'effet de jet, et le tiroir hydraulique se déplace dans sa zone morte. L'asservissement réagit comme dans la première zone 41.

L'effet de jet étant caractérisé, celui-ci est modélisé puis injecté dans la fonction de transfert de l'ensemble constitué du moteur et tiroir hydraulique, les éléments de la boucle d'asservissement étant calculés en fonction de cette fonction de transfert.

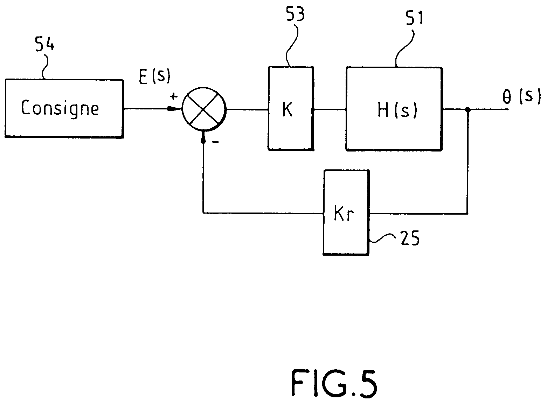

L'asservissement de position du moteur est illustré schématiquement par la figure 5. La fonction de transfert 51 du système constitué du moteur et du tiroir hydraulique est représentée par une quantité $H(s)$ fonction de la variable de Laplace $s$. Le gain du capteur de position 25 du moteur est représenté par une valeur $K_r$ et celui de la fonction de correction 53 par une valeur $K(s)$ fonction de la variable de Laplace. L'angle $\theta(s)$ de position du rotor du moteur est asservi sur une fonction $E(s)$ de consigne 54, $\theta(s)$ et $E(s)$ sont des fonctions de la variable de Laplace $s$.

La fonction de transfert $H_{BF}(s)$ du système en boucle fermée est donnée par la relation suivante :

$$H_{BF}(s) = \frac{\theta(s)}{E(s)} = \frac{K(s)H(s)}{1 + K_r K(s)H(s)} \tag{1}$$

La fonction de transfert électrique $H_e(s)$ du moteur est donnée par la relation suivante :

$$H_e(s) = \frac{I(s)}{E(s)} = \frac{1/L}{s + R/L} \tag{2}$$

où $I(s)$ est le courant traversant le stator du moteur, R et L sont respectivement la résistance série et l'inductance de ce stator.

La fonction de transfert électromécanique $H_{em}(s)$ du moteur est donnée par la relation suivante :

$$H_{em}(s) = \frac{\Gamma(s)}{I(s)} = g_m \qquad (3)$$

le couple moteur $\Gamma(s)$ étant proportionnel au courant $I(s)$ selon un coefficient de proportionnalité $g_m$.

Pour définir la fonction de transfert mécanique du système moteur et du tiroir, la caractéristique de l'effet de jet est prise en compte. Cette caractéristique peut être modélisée comme une relation non linéaire liant un effort à une position, angulaire pour le moteur. Selon l'invention, l'effet de jet est assimilé à l'action d'un ressort de rappel de raideur non linéaire

$$k_j = \frac{\partial F_j}{\partial x}$$

placé au bout du tiroir en exerçant sa force de rappel $F_j$ sur ce dernier,

$$\frac{\partial F_j}{\partial x}$$

exprimant la dérivée partielle de cette force $F_j$ par rapport à la position $x$ du tiroir. La fonction de transfert mécanique $H_m(s)$ peut alors être définie par la relation suivante :

$$H_m(s) = \frac{\theta(s)}{\Gamma(s)} = \frac{1/J}{s^2 + \frac{B}{J}s + \frac{k_j}{J}} \qquad (4)$$

où B représente le coefficient de frottement visqueux équivalent du système constitué du moteur et du tiroir vu par le moteur, et où J représente le moment d'inertie équivalent vu par le moteur.

ainsi :

$$B = \ell^2 R_v$$

où $R_v$ est le frottement visqueux du tiroir et e la longueur du bras de liaison entre le moteur et le tiroir.

et :

$$J = J_m + \ell^2 M$$

où $J_m$ est le moment d'inertie du rotor et M la masse du tiroir, $\ell$ étant la longueur du bras de liaison précitée.

$k_j$ représente le gradient de la caractéristique de l'effet de jet selon la modélisation précitée ramenée au moteur. Ainsi,

$$k_j = \frac{\partial \Gamma_j}{\partial \theta}$$

, $\Gamma_j$ étant le couple résistant vu par le moteur généré par l'effet de jet et $\theta$ étant l'angle du rotor. Le couple $\Gamma_j$ est en fait le couple antagoniste $\Gamma$ défini relativement aux figures 3 et 4 et la dérivée partielle

$$\frac{\partial F_j}{\partial \theta}$$

se déduit de ces courbes.

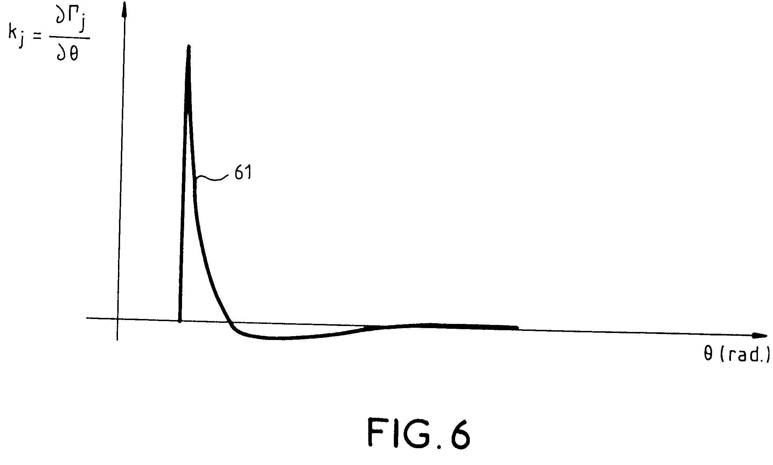

La courbe 61 de la figure 6 illustre la valeur du coefficient $k_j =$

$$\frac{\partial \Gamma_j}{\partial \theta}$$

en fonction de la position angulaire $\theta$, exprimée en radians par exemple, du rotor du moteur. Cette courbe 61 est par exemple déduite de la courbe 31 de la figure 3, comme étant la dérivée de cette courbe.

La fonction de transfert globale $H(s)$ du système constitué du moteur et du tiroir hydraulique est donnée par le produit des trois fonctions de transfert précédentes $H_e(s)$, $H_{em}(s)$, $H_m(s)$ soit :

$$H(s) = H_e(s) H_{em}(s) H_m(s) = \frac{\dfrac{g_m}{JL}}{\left(s + \dfrac{R}{L}\right)\left(s^2 + \dfrac{B}{J}s + \dfrac{k_j}{J}\right)}$$

Il apparaît selon cette fonction de transfert que l'effet de jet, par le terme $k_j$ correspondant, introduit un ordre supplémentaire dans la fonction de transfert.

Ayant connaissance de la fonction de transfert $H(s)$ du système moteur et tiroir, il ne reste plus, pour assurer la stabilité du système asservi, en boucle fermée, qu'à étudier le dénominateur $1 + K_r K(s) H(s)$ de la fonction de transfert en boucle fermée $H_{BF}(s)$ donnée par la relation (1) selon les connaissances habituelles de l'homme de métier et à partir des valeurs des coefficients R, L, J, B et $k_j$ définis précédemment. La fonction de transfert $K(s)$ de la fonction de correction est alors déterminée. Puisque celle-ci prend en compte l'effet de jet, caractérisé par exemple par le paramètre $k_j$, les instabilités dues à cet effet mis en évidence par la Déposante sont alors supprimées. Le paramètre $k_j$ peut par exemple être déterminé selon une courbe telle que présentée par la figure 6.

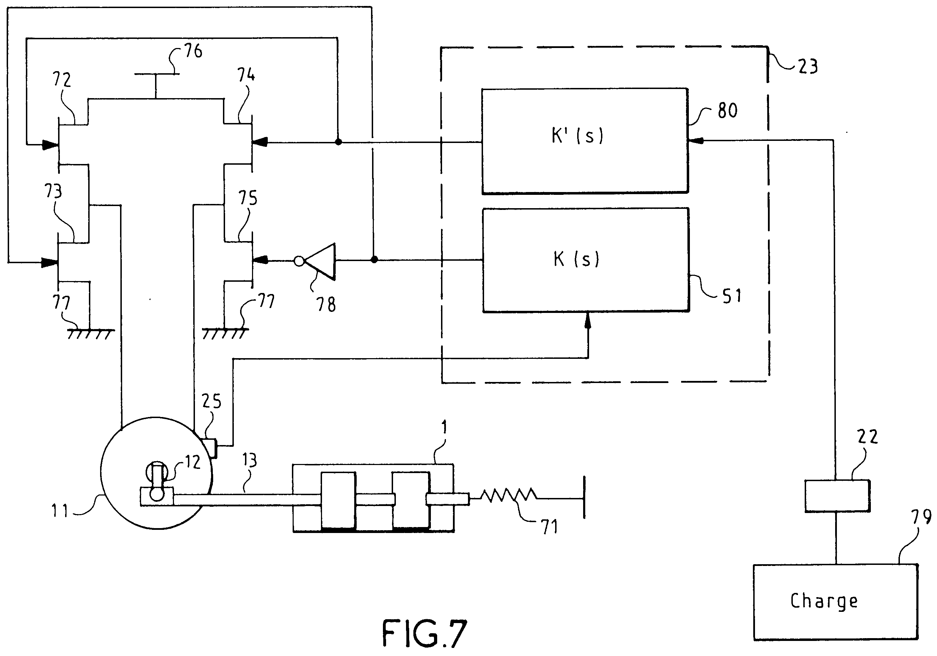

La figure 7 illustre un exemple de mise en oeuvre du dispositif selon l'invention.

Le tiroir hydraulique 1 commandé par le moteur ou actionneur rotatif 11 par l'intermédiaire d'une bielle 12 et d'une barre 13 et rappelé par des moyens de rappel 71, un ressort par exemple, sert par exemple à transmettre une énergie de commande à un système de freinage. Les entrées et sorties hydrauliques du tiroir ne sont pas représentées. L'effet de jet étant pris en compte dans la fonction de correction $K(s)$, donc corrigé par celle-ci, les instabilités qu'il peut être susceptible de causer sont supprimées et la raideur du ressort 71 peut être en conséquence d'une valeur relativement faible, ce qui permet d'augmenter la bande passante du système, c'est-à-dire d'obtenir de bonnes performances au niveau des temps de réponse.

Le moteur est par exemple commandé en courant par un pont de transistors 72, 73, 74, 75 en H, des transistors à effet de champ par exemple. Des transistors 72, 74 du pont sont reliés à une alimentation 76, les deux autres 73, 75 étant reliés à un potentiel de référence 77.

Un capteur de position 25 est relié à un circuit de correction 51 contenu par exemple dans un module électronique 23, analogique ou numérique. Le circuit de correction a par exemple la fonction de transfert $K(s)$ précédemment définie. Dans le cas de circuits analogiques, la fonction de transfert calculée $K(s)$ est par exemple obtenue selon un réseau de condensateurs et de résistances selon une méthode connue de l'homme de métier. Dans le cas d'un asservissement numérique, cette fonction de transfert est par exemple programmée puis rentrée dans la mémoire de travail d'un microprocesseur. Cette fonction a pour signal d'entrée le signal d'erreur entre une consigne de position, mémorisée par exemple dans le module électronique 23, et la position lue par le capteur 25. Le circuit de correction 51 délivre par exemple un signal de commande binaire, amplifié par des circuits non représentés, qui commande le sens de rotation du moteur en fonction du signal d'erreur, le signal étant par exemple commandé dans un sens pour un signal d'erreur positif et dans l'autre sens pour un signal d'erreur négatif. Pour cela le signal amplifié attaque par exemple directement la grille d'un 73 des deux transistors reliés au potentiel de référence 77 et attaque l'autre 75 transistor relié à ce potentiel de référence 77 par l'intermédiaire d'un inverseur 78. Si les transistors sont bipolaires, c'est la base qui est attaquée.

Une deuxième boucle d'asservissement peut par exemple être adjointe à la boucle d'asservissement de position du moteur. Cette deuxième boucle prend par exemple en compte le système constitué du moteur 11, du tiroir 1 et de la charge 79 de ce dernier. Dans le cas de l'application à un système de freinage par exemple, un capteur 22 délivre à un deuxième circuit de correction 80 de fonction de transfert $K'(s)$ le niveau de pression qui est comparé à une consigne mémorisée par exemple dans le module électronique 23. La deuxième fonction de correction 80 délivre par exemple un signal de commande des deux autres transistors 72, 74 reliés au potentiel d'alimentation 76, ce signal de commande agissant sur leur grille ou leur base, définit leur durée de conduction par périodes et donc la valeur du courant moyen délivré au moteur, ce qui détermine en fait la force exercée par le tiroir sur la charge 79, un système de freinage par exemple. Le tiroir hydraulique peut être à un ou plusieurs étages.

**Revendications**

1. Dispositif de commande d'un tiroir hydraulique, le tiroir hydraulique (1) étant mis en mouvement par un moteur (11) et des moyens de rappel (71), caractérisé en ce qu'il comprend des moyens (72, 73, 74, 75, 78) pour commander le sens de rotation du moteur en fonction de l'erreur de position de ce dernier, les moyens de commande du sens de rotation étant contrôlés par un signal fourni par un circuit de correction (51) dont la fonction de transfert ( $K(s)$ ) tient compte d'un effet de jet (31, 32, 61) s'exerçant sur le tiroir (1), l'effet de jet étant assimilé à l'action d'un ressort de rappel de raideur non linéaire.

2. Dispositif selon la revendication 1, caractérisé en ce que le signal fourni par le circuit de correction (51) est binaire.

3. Dispositif selon l'une quelconque des revendications précédentes, caractérisé en ce que l'effet de jet est caractérisé par un coefficient ($k_j$) égal à la dérivée partielle

$$\left( \frac{\partial \Gamma_j}{\partial \theta} \right)$$

du couple antagoniste ($\Gamma_j$) qu'il produit par rapport à la portion angulaire ($\theta$) du rotor du moteur.

4. Dispositif selon la revendication 3, caractérisé en ce que la fonction de transfert $H(s)$ utilisée pour l'ensemble constitué du moteur (11) et du tiroir hydraulique (1) à la forme suivante :

$$H(s) = \frac{\dfrac{g_m}{JL}}{\left(s + \dfrac{R}{L}\right)\left(s^2 + \dfrac{B}{J}s + \dfrac{k_j}{J}\right)}$$

où

- $g_m$ est un coefficient de proportionnalité entre le couple développé par le moteur (11) et le courant le parcourant ;

- J est le moment d'inertie de l'ensemble ramené au moteur (11) ;

- R est la résistance série du moteur (11) ;

- L est l'inductance du moteur (11) ;

- B est le coefficient de frottement visqueux équivalent de l'ensemble (11,1) ;

- $k_j$ est la caractéristique de l'effet de jet.

la fonction de transfert $K(s)$ du circuit de correction (51) étant calculée pour que l'asservissement de position en boucle fermée de l'ensemble (11, 1) soit stable.

5. Dispositif selon l'une quelconque des revendications précédentes, caractérisé en ce que les moyens de commande du sens de rotation du moteur (11) sont constitués par deux transistors (73, 75) d'un pont de transistors (72, 73, 74, 75) en H alimentant le moteur (11) et d'un inverseur (78), le signal binaire attaquant directement un transistor (73) et attaquant l'autre transistor (75) par l'intermédiaire de l'inverseur (78), les deux transistors étant reliés à un même potentiel (77).

6. Dispositif selon l'une quelconque des revendications précédentes, caractérisé en ce que l'erreur de position est l'erreur entre une consigne mémorisée dans un module électronique (23) et la position du rotor du moteur (11) lue par un capteur (25) relié au module électronique, le signal d'erreur étant fourni au circuit de correction (51), le signal binaire de sortie de ce dernier étant amplifié par des moyens d'amplification

7. Dispositif selon la revendication 6, caractérisé en ce que la fonction de transfert ( $K(s)$ ) du circuit de correction est programmée et stockée dans la mémoire de travail d'un microprocesseur contenu dans le module électronique.

8. Dispositif selon l'une quelconque des revendications précédentes, caractérisé en ce qu'une deuxième boucle d'asservissement est adjointe à la boucle d'asservissement de position du moteur, la deuxième boucle d'asservissement commandant la valeur du courant moyen parcourant le moteur en fonction d'un niveau de charge (79) du tiroir (1).

9. Dispositif selon la revendication 8, caractérisé en ce que le tiroir hydraulique (1) étant appliqué à un système de freinage, la deuxième boucle asservit la valeur de courant du moteur en fonction du niveau de pression dans le système de freinage.

FIG.1

FIG.2

FIG.3

FIG. 4

EP 0 691 252 A1

FIG.5

FIG.6

$$k_j = \frac{\partial \Gamma_j}{\partial \theta}$$

$\theta$ (rad.)

61

FIG.7

EP 0 691 252 A1

**Office européen des brevets**

## RAPPORT DE RECHERCHE EUROPEENNE

Numero de la demande

EP 95 40 1422

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | DE-A-43 26 452 (HR TEXTRON INC.) <br> * abrégé; colonne 3, ligne 19 - colonne 8, ligne 22; figures 1 - 8 * <br> --- | 1 | B60T13/68 <br> F15B13/044 <br> F15B9/03 <br> G05D3/14 |
| Y | US-A-4 526 342 (WAKEFIELD, DECEASED) <br> * le document entier * <br> --- | 1,6,7 | |
| Y | FR-A-2 454 549 (HEHL) <br> * page 4, ligne 3 - page 9, ligne 33; page 10, ligne 32 - page 11, ligne 11; figures 1 - 5 * <br> --- | 1,6,7 | |
| Y | US-A-5 012 722 (MC CORMICK) <br> * abrégé; colonne 1, ligne 16 - colonne 2, ligne 23; colonne 5, ligne 14 - colonne 6, ligne 20; colonne 7, ligne 12 - colonne 8, ligne 27; figures 3-5, 8 * <br> --- | 1,6,7 | |
| A | EP-A-0 589 629 (TRINOVA LIMITED) <br> * le document entier * <br> --- | 1,6,7 | |
| A | WO-A-90 07063 (OLSEN CONTROLS INC.) <br> * abrégé; page 3, ligne 17 - page 4, ligne 8; page 5, lignes 1 - 24; page 8, ligne 15 - page 9, ligne 21; page 12, ligne 22 - page 24, ligne 7; figures 1- 8 * <br> --- | 1,8 | **DOMAINES TECHNIQUES RECHERCHES (Int.Cl.6)** <br> F15B <br> B60T <br> G05D |
| A | EP-A-0 131 656 (KONTAK MANUFACTURING COMPANY LIMITED) <br> * abrégé; page 7, lignes 8 - 21; figures 1, 2, 7 * <br> --- | 1,5 | |
| A | FR-A-2 538 491 (BRONZAVIA) <br> * abrégé; page 5, ligne 1 - page 6, ligne 23; figures 1 - 4 * <br> --- | 1 | |

-/--

Le présent rapport a été établi pour toutes les revendications

| Lieu de la recherche | Date d'achèvement de la recherche | Examinateur |
|---|---|---|
| BERLIN | 6 Septembre 1995 | Beitner, M |

Office européen
des brevets

**RAPPORT DE RECHERCHE EUROPEENNE**

Numero de la demande

EP 95 40 1422

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | DE-A-27 46 832 (HAWKER SIDDELEY DYNAMICS ENGINEERING LTD.) <br> * page 9, lignes 5 - 16; figure 1 * <br> --- | 1 | |
| A | US-A-4 439 716 (MINNICH) <br> * le document entier * <br> --- | 1 | |
| A | US-A-4 451 769 (MINNICH ET AL.) <br> * le document entier * <br> ----- | 1 | |

DOMAINES TECHNIQUES
RECHERCHES (Int.Cl.6)

Le présent rapport a été établi pour toutes les revendications

| Lieu de la recherche | Date d'achèvement de la recherche | Examinateur |
|---|---|---|
| BERLIN | 6 Septembre 1995 | Beitner, M |